# EUROPÄISCHE PATENTANMELDUNG

(11) **EP 0 972 446 A1**
(43) Veröffentlichungstag der Anmeldung: **19.01.2000**
(21) Anmeldenummer: 99113303.4
(22) Anmeldetag: 09.07.1999
(51) Int. Cl.: A01K 97/20

(54) **Behälter zur Aufnahme geangelter Fische**

(30) Priorität: 16.07.1998 DE 19831915
(71) Anmelder: Zelka, Ivan, 86157 Augsburg (DE)
(72) Erfinder: Zelka, Ivan, 86157 Augsburg (DE)
(74) Vertreter: Munk, Ludwig, Dipl.-Ing.

(57) **Zusammenfassung**

Geangelte Fische können schnell, zuverlässig und sicher betäubt und getötet werden, wenn ein Behälter (1) Verwendung findet, der mit einem abnehmbaren Deckel (2) versehen ist, der mit einer Ausnehmung (8) versehen ist, von der ein bis zum Deckelrand durchgehender Schlitz (9) abgeht und der eine als Klemmeinrichtung (12) zum Halten eines Fisches ausgebildete Abdeckung zugeordnet ist.

## Beschreibung

Die Erfindung betrifft einen Behälter zur Aufnahme geangelter Fische.

Geangelte Fische müssen gemäß Fischereivorschrift betäubt und getötet werden. Bisher wird dabei so vorgegangen, dass der Angler den Fisch mit einer Hand erfasst und mit der anderen Hand ein Betäubungs- bzw. Tötungswerkzeug führt. Dies ist umständlich und kann zu Selbstverletzungen des Anglers führen. Bei besonders kraftvollen und/oder an der Oberfläche glitschigen Fischen, wie Aalen oder dergleichen, ist diese Gefahr besonders groß. Oft ist es daher nicht möglich, derartige Fische in der vorschriftgemäßen Weise zu betäuben und zu töten. Vielmehr können diese Fische nur durch Ersticken getötet werden und müssen daher lange leiden.

Hiervon ausgehend ist es daher die Aufgabe der vorliegenden Erfindung, einen Fischerei-Ausrüstungsgegenstand zu schaffen, der unter Vermeidung der geschilderten Nachteile eine tierfreundliche Behandlung geangelter Fische ermöglicht.

Diese Aufgabe wird erfindungsgemäß durch die dem Anspruch 1 zugrundeliegende Kombination gelöst. Diese enthält einen Behälter zur Aufnahme geangelter Fische mit einem abnehmbaren Deckel, der mit einer Ausnehmung versehen ist, von der ein bis zum Deckelrand durchgehender Schlitz abgeht und der eine als Klemmeinrichtung zum Halten eines Fisches ausgebildete Abdeckung zugeordnet ist.

Bei Verwendung des erfindungsgemäßen Behälters ist es in vorteilhafter Weise möglich, einen an einem an einer Schnur befestigten Haken hängenden Fisch bei geöffnetem Deckel in den Behälter einzubringen, anschließend den Deckel zu schließen und den Fisch über die deckelseitige Ausnehmung zum Eingriff mit der Klemmeinrichtung zu bringen. Der mittels der Klemmeinrichtung gehaltene Fisch kann dann schnell, zuverlässig und gefahrlos betäubt und getötet werden. Die erfindungsgemäßen Maßnahmen dienen daher dem Tierschutz und stellen sicher, dass unnötige Tierquälereien vermieden werden können. Mit den erfindungsgemäßen Maßnahmen werden somit die eingangs geschilderten Nachteile vollständig vermieden.

Vorteilhafte Ausgestaltungen und zweckmäßige Fortbildungen der übergeordneten Maßnahmen sind in den Unteransprüchen angegeben. So kann die Klemmeinrichtung zweckmäßig als Federzange ausgebildet sein, deren Zangenhälften jeweils einen Griff und eine Klemmbacke aufweisen und mit einer als Schenkelfeder ausgebildeten Rückstellfeder zusammenwirken. Dies ermöglicht eine einfache und zuverlässige Einhand-Bedienung.

Eine weitere vorteilhafte Maßnahme kann darin bestehen, dass die Klemmbacken einander zugewandte, konkave Klemmflächen aufweisen. Dies ergibt eine Anpassung an den im Querschnitt etwa ovalen Fischkörper, so dass auch kleine Fische zuverlässig gehalten werden können.

Eine weitere besonders zweckmäßige Maßnahme kann darin bestehen, dass die Klemmbacken mit in gegenseitigen Überschneidungseingriff bringbaren Enden versehen sind. Hierdurch ist sichergestellt, dass die Klemmbacken trotz ihrer Krümmung im geschlossenen Zustand keine unzulässig große, mittlere Öffnung der Ausnehmung des Deckels freilassen.

In weiterer Fortbildung dieses Gedankens können die Klemmbacken im Bereich ihrer voneinander abgewandten Seiten mit fahnenartig abstehenden Leisten versehen sein. Hierdurch wird auch eine zuverlässige Randabdeckung der Ausnehmung des Deckels gewährleistet.

Zweckmäßig ist der Deckel als Schwenkdeckel ausgebildet, der einerseits schwenkbar gelagert und andererseits mittels einer Rasteinrichtung fixierbar ist. Dies ergibt eine einfache Handhabung, da die Rasteinrichtung beim Schließen des Deckels automatisch einrastet. Zur Stabilisierung des mit einem Schlitz versehenen Deckels kann die Rasteinrichtung zweckmäßig im Bereich des randseitigen Endes des Schlitzes angeordnet sein.

In vorteilhafter Weise kann der Schlitz randseitig erweitert sein. Hierdurch ergibt sich ein Einführtrichter, der das Einfädeln der Schnur erleichtert.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine Seitenansicht eines erfindungsgemäßen Behälters und
- Figur 2: eine Draufsicht auf den Behälter gemäß Figur 1.

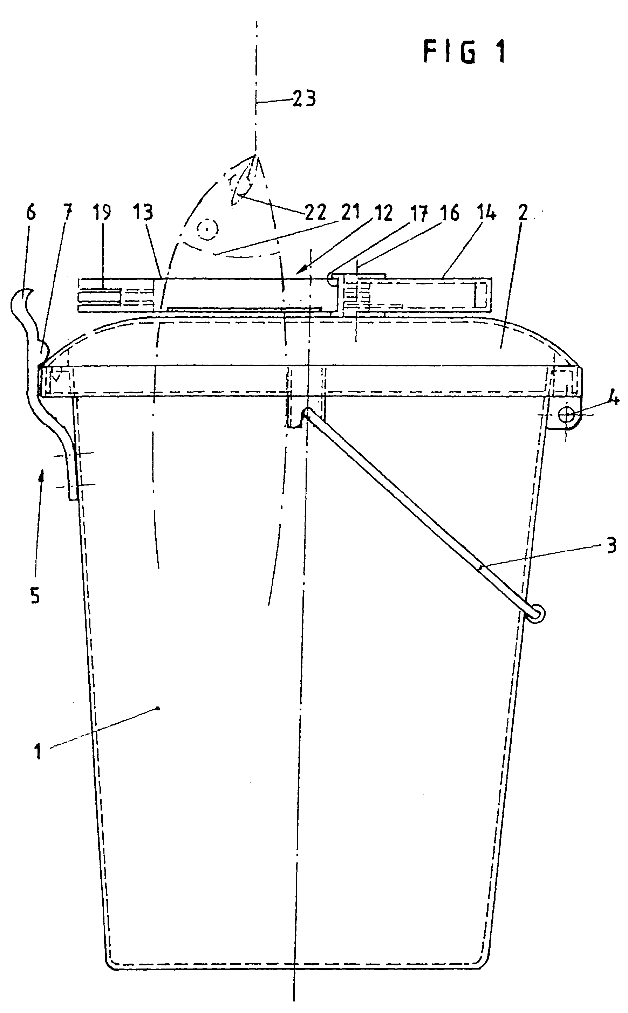

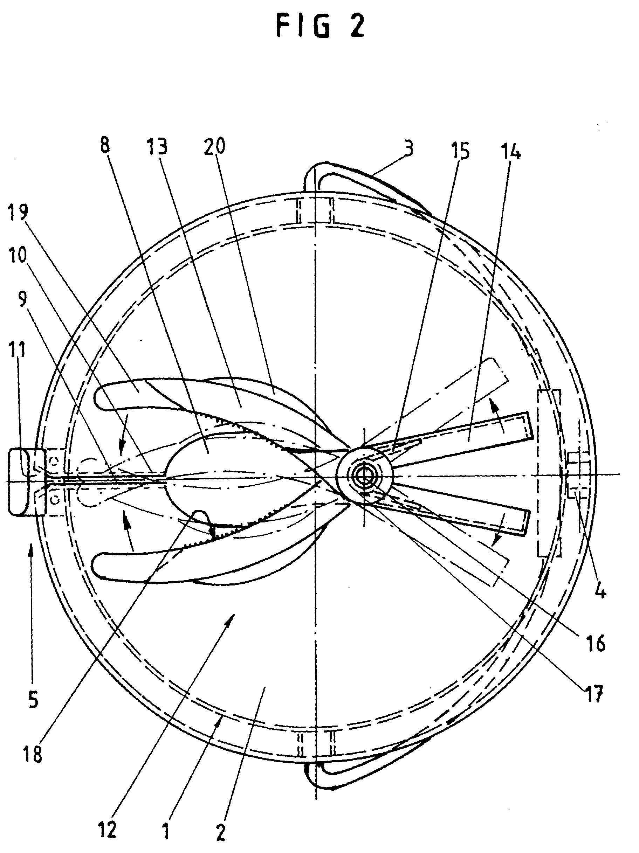

Der den Figuren 1 und 2 zugrundeliegende Behälter besitzt ein nach Art eines Kübels 1 ausgebildetes Unterteil und ein als Klappdeckel 2 ausgebildetes Oberteil. Der Kübel 1 kann mit einem Tragbügel 3 versehen sein. Der Klappdeckel 2 ist mittels eines Scharniers 4 schwenkbar am Kübel 1 gelagert.

Dem Scharnier 4 diametral gegenüberliegend ist eine Halteeinrichtung 5 vorgesehen, mittels welcher der Klappdeckel 2 in der den Kübel 1 verschließenden Stellung fixierbar ist. Die Halteeinrichtung 5 ist als Rasteinrichtung ausgebildet, die eine am Kübel 1 befestigte, nach oben abstehende Federzunge 6 aufweist, die mit einer Rastleiste 8 versehen ist, die beim Schließen des Klappdeckels 2 über den oberen Deckelrand hinwegschnappt und so den Klappdeckel 2 fixiert. Zur Erleichterung der Handhabung kann die Federzunge 6 mit einer Grifflasche versehen sein.

Der Innenraum des Kübels 1 dient zur Aufnahme geangelter Fische.

Der Klappdeckel 2 ist, wie am besten aus Figur 2 erkennbar ist, mit einer von seinem Rand nicht geschnittenen, hier vom Rand entfernten, durch eine ovale Ausnehmung gebildeten Öffnung 8 versehen, von der ein bis zum umlaufenden Deckelrand durchgehender, radial verlaufender Schlitz 9 abgeht. Im Bereich der Längskanten des Schlitzes 9 können Verstärkungsleisten 10 vorgesehen sein. Das randseitige Ende des Schlitzes 9 ist zur Bildung eines Einführtrichters 11 erweitert. Der Schlitz 9 ist so angeordnet, dass sich sein randseitiges, hier als Einführtrichter 11 ausgebildetes Ende im Bereich der Halteeinrichtung 5 befindet, wodurch trotz der geschlitzten Ausführung des Klappdeckels 2 eine hohe Stabilität gewährleistet wird.

Die Ausnehmung 8 ist verschließbar bzw. freigebbar. Hierzu dient eine oberhalb der Ausnehmung 8 angeordnete Klemmeinrichtung 12 vorgesehen, mittels der, wie in Figur 1 angedeutet ist, ein Fisch gehalten werden kann, und die gleichzeitig dazu geeignet ist, die Ausnehmung 8 zu verschließen, wie in Figur 2 mit strichpunktierten Linien angedeutet ist, bzw. freizugeben, wie in Figur 2 mit durchgezogenen Linien gezeichnet ist. Die Klemmeinrichtung 12 ist im dargestellten Beispiel als Federzange ausgebildet, die aus zwei schwenkbar aneinander gelagerten, zweiarmigen Zangenhälften besteht, die jeweils eine Klemmbacke 13 und einen Griff 14 besitzen und an denen eine als Schenkelfeder ausgebildete Spannfeder 15 angreift, die so angeordnet ist, dass die Klemmbacken 13 unter der Wirkung der Spannfeder 15 aneinander angestellt werden und durch Zusammendrücken der Griffe 14 entgegen der Wirkung der Spannfeder 15 voneinander abgestellt werden können. Beim Loslassen der Griffe 14 bewegen sich die Spannbacken 13 automatisch aufeinander zu.

Zur Aufnahme der die Klemmeinrichtung 12 bildenden Federzange ist ein am Klappdeckel 2 befestigter, nach oben abstehender Stift 16 vorgesehen, der das als Büchse ausgebildete Lager 17 der die Klemmeinrichtung 12 bildenden Federzange durchgreift. Zweckmäßig ist der Stift 16 mit einem Kopf versehen, der eine axiale Bewegung der Federzange und damit eine unbeabsichtigte Lösung vom Deckel verhindert.

Die Klemmbacken 13 sind, wie am besten aus Figur 2 erkennbar ist, so gekrümmt, dass die einander zugewandten Klemmflächen 18 eine konkave Kontur erhalten. Dies ergibt eine gewisse Anpassung an den im Querschnitt etwa ovalen Fischkörper.

Im Bereich der Klemmflächen 18 kann eine Riffelung bzw. Oberflächenaufrauhung vorgesehen sein, um die Haltewirkung zu verbessern.

Die vorderen freien Enden der Klemmbacken 13 besitzen eine beispielsweise nach Art von Nut und Feder ausgebildete, gabelförmige Eingriffkontur 19. Hierdurch ist sichergestellt, dass die freien Enden der Klemmbacken 13 in der Schließstellung einander überschneiden können, wie in Figur 2 mit strichpunktierten Linien angedeutet ist. Hierdurch wird erreicht, dass trotz der Krümmung der Klemmbacken 13 diese soweit aneinander angenähert werden können, dass zwischen ihnen nur ein vergleichsweise kleiner Spalt verbleibt und dementsprechend die Ausnehmung 8 ausreichend verschlossen ist. Um in der Schließstellung auch eine zuverlässige Abdeckung der äußeren Randbereiche der Ausnehmung 8 zu gewährleisten, sind die Klemmbacken 13 mit fahnenartig nach außen abstehenden, rippenartig ausgebildeten Leisten 20 versehen.

Der vorliegende Behälter gehört zur Ausrüstung von Anglern, insbesondere solchen Anglern, die auf Aale angeln, die bekanntlich besonders kraftvoll sind und eine sehr glatte, glitschige Oberfläche besitzen. Sobald ein Fisch 21 angebissen hat, wird dieser samt Haken 22 und Schnur 23 in den Kübel 1 eingebracht. Hierzu wird der Klappdeckel 2 kurzzeitig geöffnet und geschlossen. Die Schnur 23, an welcher der Haken 22 befestigt ist, wird dabei in den Schlitz 9 des Klappdeckel 2 eingeführt. Anschließend wird die durch die Ausnehmung 8 gebildete Deckelöffnung durch entsprechende Betätigung der die Klemmeinrichtung 12 bildenden Federzange freigegeben und der Fisch 21 mittels der Schnur 23 soweit angehoben, dass er teilweise aus der Ausnehmung 8 heraussteht, wie in Figur 1 angedeutet ist. Sobald der Fisch 21 in der richtigen Höhe ist, werden die Griffe 14 der Federzange losgelassen, wodurch die Klemmbacken 13 durch die Spannfeder 15 aufeinanderzu bewegt werden, so dass der Fisch 21 von den Klemmbacken 13 erfasst und gehalten wird.

Der so gehaltene Fisch 21 kann schnell, zuverlässig und sicher betäubt und getötet werden. Danach kann der Haken 22 entfernt und die Halteeinrichtung 12 geöffnet werden, so dass der Fisch 21 in den darunter sich befindenden kübelseitigen Aufnahmeraum fällt.

Vorstehend ist zwar ein besonders bevorzugtes Ausführungsbeispiel der Erfindung näher erläutert, ohne dass jedoch hiermit eine Beschränkung verbunden sein soll. Vielmehr stehen dem Fachmann eine Reihe von Möglichkeiten zur Verfügung, um die erfindungsgemäßen Maßnahmen an die Verhältnisse des Einzelfalls anzupassen.

## Patentansprüche

1. Behälter zur Aufnahme geangelter Fische mit einem abnehmbaren Deckel (2), der mit einer Ausnehmung (8) versehen ist, von der ein bis zum Deckelrand durchgehender Schlitz (9) abgeht und der eine als Klemmeinrichtung (12) zum Halten eines Fisches ausgebildete Abdeckung zugeordnet ist.

2. Behälter nach Anspruch 1, **dadurch gekennzeichnet, dass** die Klemmeinrichtung (12) zwei entgegen der Wirkung einer Spannfeder (15) voneinander abstellbare Klemmbacken (13) aufweist, die einander zugewandte, vorzugsweise konkave Klemmflächen (18) mit erhöhter Oberflächenrauhigkeit aufweisen.

3. Behälter nach Anspruch 2, **dadurch gekennzeichnet, dass** die Klemmeinrichtung (12) als Federzange ausgebildet ist, deren Zangenhälften jeweils eine Klemmbacke (13) und einen Griff (14) aufweisen und mit der als Schenkelfeder ausgebildeten Spannfeder (15) zusammenwirken.

4. Behälter nach einem der vorhergehenden Ansprüche 2 oder 3, **dadurch gekennzeichnet, dass** die Klemmbacken (13) mit in gegenseitigen Überschneidungseingriff bringbaren Enden (19) versehen sind.

5. Behälter nach einem der vorhergehenden Ansprüche 2 bis 4, **dadurch gekennzeichnet, dass** die Klemmbacken (13) im Bereich ihrer voneinander abgewandten Seiten mit fahnenartig vorspringenden, rippenartigen Leisten (20) versehen sind.

6. Behälter nach einem der vorhergehenden Ansprüche, **dadurch gekennzeichnet, dass** die Klemmeinrichtung (12) im Bereich der Deckeloberseite vorgesehen ist.

7. Behälter nach einem der vorhergehenden Ansprüche, **dadurch gekennzeichnet, dass** der Deckel (2) mit einem nach oben abstehenden Stift (16) versehen ist, auf dem die Klemmeinrichtung (12) vorzugsweise mit einer Lagerbüchse (17), aufgenommen ist.

8. Behälter nach einem der vorhergehenden Ansprüche, **dadurch gekennzeichnet, dass** der Deckel (2) als Schwenkdeckel ausgebildet ist, der einerseits schwenkbar gelagert und andererseits mittels einer Halteeinrichtung (5) fixierbar ist, die vorzugsweise im Bereich des randseitigen Endes des Schlitzes (9) angeordnet ist.

9. Behälter nach einem der vorhergehenden Ansprüche, **dadurch gekennzeichnet, dass** die Längskanten des Schlitzes (9) gegenüber der Wandstärke des Deckels (2) verstärkt sind.

10. Behälter nach einem der vorhergehenden Ansprüche, **dadurch gekennzeichnet dass** der Schlitz (9) mit einem randseitigen Einlauftrichter (11) versehen ist.
